# EUROPÄISCHE PATENTSCHRIFT

(11) **EP 3 199 975 B1**
(45) Veröffentlichungstag und Bekanntmachung des Hinweises auf die Patenterteilung: **16.10.2019**
(21) Anmeldenummer: 17153998.4
(22) Anmeldetag: 31.01.2017
(51) Int. Cl.: G01S 13/88, G01S 13/50, G01S 13/42, G01S 7/35

(54) **RADARBASIERTER NÄHERUNGSSENSOR**
RADAR-BASED PROXIMITY SENSOR
CAPTEUR DE PROXIMITÉ RADAR

(30) Priorität: 01.02.2016 DE 102016201492
(43) Veröffentlichungstag der Anmeldung: 02.08.2017
(73) Patentinhaber: InnoSenT GmbH, 97499 Donnersdorf (DE)
(72) Erfinder: Bäuerlein, Stefan, 97497 Dingolshausen (DE); Vinci, Gabor, 96052 Bamberg (DE)
(74) Vertreter: Grauel, Andreas

(56) Entgegenhaltungen:
- WO-A1-2015/184406
- WO-A2-2008/030357
- YANG YIHONG ET AL: "Doppler Radar Motion Sensor With CMOS Digital DC-Tuning VGA and Inverter-Based Sigma-Delta Modulator", IEEE TRANSACTIONS ON INSTRUMENTATION AND MEASUREMENT, IEEE SERVICE CENTER, PISCATAWAY, NJ, US, Bd. 63, Nr. 11, 1. November 2014 (2014-11-01), Seiten 2666-2674, XP011561004, ISSN: 0018-9456, DOI: 10.1109/TIM.2014.2313032 [gefunden am 2014-10-09]
- GU CHANGZHAN ET AL: "Noncontact Large-Scale Displacement Tracking: Doppler Radar for Water Level Gauging", IEEE MICROWAVE AND WIRELESS COMPONENTS LETTERS, IEEE SERVICE CENTER, NEW YORK, NY, US, Bd. 24, Nr. 12, 1. Dezember 2014 (2014-12-01), Seiten 899-901, XP011565401, ISSN: 1531-1309, DOI: 10.1109/LMWC.2014.2352852 [gefunden am 2014-11-27]

## Beschreibung

### Technisches Gebiet

Die Erfindung betrifft einen radarbasierten Näherungssensor zur Detektion von statischen Objekten als auch von bewegten Objekten.

### Stand der Technik

Radarbasierte Näherungssensoren sind im Stand der Technik bekannt, welche die Bewegung von Objekten in einem definierten Raumbereich erkennen können.

Für eine vollständige Präsenzdetektion von sowohl bewegten als auch statischen Zielen befinden sich bereits verschiedenste Radartechniken mit unterschiedlichen Modulationsverfahren in Einsatz. Die bekannten Radarsensoren mit FMCW-, FSK-, FMSK-, Puls- oder Puls-Envelope-Modulationsschemen weisen einen Totbereich vor dem Radarsensor auf, in welchem keine zuverlässige Messung vorgenommen werden kann. Dabei ist der Totbereich auch von der Modulationsbandbreite des Radarsensors abhängig und liegt für bekannte Radargeräte mit Bandbreiten im einstelligen GHz Bereich bei einem Radius von circa 30 cm. Daher sind solche Radarsensoren für eine Näherungssensorik ungeeignet, bei der es um die Detektion von Annäherungen von unter 30 cm bis hin zu unter 1 cm geht.

Darüber hinaus erlauben einige der genannten Radarsensoren aufgrund ihrer Modulationsverfahren keine Detektion von statischen, also unbewegten, Zielen. Zudem erfordern die oben genannten Radarsensoren und deren Modulationstechniken in der Regel eine mittel bis hohe Komplexität der Sensorhardware, was sich hinsichtlich der Kosten negativ auswirkt.

Für eine Präsenzdetektion, jedoch ohne exakte Abstandsmessanforderungen, werden im Stand der Technik Homodyn-Dauerstrich-Doppler-Radarsensoren eingesetzt. Die Doppler-Frequenzverschiebung des vom Ziel reflektierten Signals verursacht ein Wechselspannungssignal im Basisband nach dem Demodulationsprozess. Die Frequenz des Basisbandsignals ändert sich in Funktion der radialen Geschwindigkeit des Ziels im Bezug zum Radargerät. Die Amplitude ist andererseits von der Sendeleistung, vom Radar-Rückstreuquerschnitt sowie vom Abstand des Ziels zum Sensor abhängig.

Wenn bei solchen Homodyn-Radarsensoren ein komplexer I/Q-Mischer als Demodulator eingesetzt wird, kann auch die Bewegungsrichtung des Ziels detektiert werden. Für Bewegungen des Ziels in Richtung hin zu dem Radarsensor wird eine positive Doppler-Frequenzverschiebung verursacht, bei Bewegungen des Ziels weg von dem Radarsensor wird eine negative Frequenzverschiebung verursacht.

Diese Doppler-Radarsensoren zeigen sich als nachteilig. Die Basisbandsignale solcher Radarsensoren werden typischerweise hochpassgefiltert um parasitäre Überkopplungseffekte zwischen Sende- (TX) und Empfangszweig (RX) zu eliminieren, was parasitäre Überkopplungen zwischen dem TX- und RX-Zweig bei Homodyn-Radarsensoren als Gleichspannungsanteil im Basisband verursachen würde. Dieser so genannten "Bias-Effekt" wird durch das Hochpassfiltern eliminiert und das in der Regel besonders kleine Wechselspannungsnutzsignal wird durch den Hochpassfilter geleitet und mittels rauscharmer Operationsverstärker verstärkt, typischerweise um etwa 60 bis 80 dB.

Diese resultierenden Basisbandsignale werden dann mittels eines Komparators mit einem voreingestellten Schwellwert verglichen. Falls der Schwellwert überschritten wird, wird ein Schaltvorgang ausgelöst.

Hierbei können allerdings nur zum Radarsensor in Radialrichtung bewegte Ziele detektiert werden, da für stehende Ziele keine Doppler-Frequenzverschiebung verursacht wird und nur ein Gleichspannungsanteil im Basisband generiert wird. Die Gleichspannung wird aber hochpassgefiltert und von der Auswertelogik ignoriert. Deshalb sind statische Ziele für traditionelle Doppler-Radarsensoren unsichtbar.

Zudem sind auch eher langsame oder nahezu tangential am Sensor vorbei bewegte Ziele von solchen Sensoren kaum zu detektieren, da nur der Wirkanteil des Geschwindigkeitsvektors, welcher in radialer Richtung zum Radarsensor ausgerichtet ist, eine Doppler-Frequenzverschiebung generiert.

Für Ziele, die sich nahezu tangential an dem Radarsensor vorbei bewegen, ist der Wirkanteil sehr klein. Dadurch ist die Amplitude des durch die Bewegung verursachten spektralen Anteils besonders klein. Das Empfangssignal soll deswegen verstärkt werden.

Um eine Übersteuerung der Analog-Digital-Wandler/-Verstärker zu vermeiden, muss der Gleichspannungsanteil vor der Verstärkung gelöscht werden. Dafür würde idealerweise ein Filter mit unendlicher Filterflankensteilheit eingesetzt werden. Hochpass-Filterstrukturen haben allerdings nur eine endliche Filterflankensteilheit, so dass die niederfrequenten Signale, die von langsamen Zielen generiert werden, somit auch von den Filterstrukturen gedämpft werden. Diese sind daher noch schwerer zu detektieren.

Betrachtet man beispielsweise eine Bewegung einer Hand, die in einem Abstand von 20 cm vor dem Radarsensor eine langsame wischende Bewegung ausführt. Gemäß dem oben Ausgeführten werden die Fingergesten nicht erkannt und bleiben quasi unsichtbar.

Yihong Yang et al.: "Doppler Radar Motion Sensor With CMOS Digital DC-Tuning VGA and Inverter-Based Sigma-Delta Modulator" beschreiben ein gleichstrom- oder alternativ wechselstromgekoppeltes CW-Radar.

Changzhan Gu et al.: "Noncontact Large-Scale Displacement Tracking: Doppler Radar for Water Level Gauging" beschreiben ein CW-Radar mit DC-Offset-Kompensation.

### Darstellung der Erfindung, Aufgabe, Lösung, Vorteile

Es ist die Aufgabe der Erfindung, einen Radarsensor zu schaffen, der einfach und kostengünstig aufgebaut ist aber dennoch möglichst ohne größeren Totbereich auskommt, so dass auch Annäherungen von Objekten auch in einem nahen Bereich, beispielsweise von unter 30 cm bis etwa 1 cm und gegebenenfalls auch darunter, ebenfalls detektierbar sind. Dabei ist es weiterhin auch eine Aufgabe der Erfindung, dass der Radarsensor auch die Detektion von statischen Elementen oder von sich langsam bewegenden Elementen erlaubt. Dabei wird im Weiteren zwischen solchen statischen oder quasistatischen Objekten nicht weiter unterschieden. Sich langsam bewegende Objekte werden dabei mit den Methoden ermittelt, die auch für statische Objekte eingesetzt werden. Auch ist es die Aufgabe der Erfindung, eine Vorrichtung mit einem solchen Näherungssensor zu schaffen, die vielfältige Optionen zu deren Steuerung erlaubt.

Die erfindungsgemäße Lösung ist vorteilhafterweise kostengünstig, robust und reproduzierbar, um verschiedenste Applikationen, insbesondere auch im so genannten Consumer-Bereich, als auch einfache und kostengünstige Anwendungen, beispielsweise in der Automatisierungstechnik, zu ermöglichen. Dabei wird eine sichere Detektion von Objekten in einem definierten Schaltbereich gewünscht, wobei verschiedenste Objekte detektierbar sein sollen und es sollen möglichst Fehldetektionen von Gegenständen außerhalb des Schaltbereichs vermieden werden.

Die Aufgabe zum Näherungssensor wird mit den Merkmalen von Anspruch 1 gelöst.

Ein Ausführungsbeispiel der Erfindung betrifft einen radarbasierten Näherungssensor mit einer Sendeantenne zum Senden eines Ausgangssignals und mit zumindest einer ersten Empfangsantenne zum Empfangen eines ersten Empfangssignals, mit einem Signalgenerator zur Erzeugung des Ausgangssignals, wobei das Empfangssignal mittels eines I/Q-Demodulators in die Basisbandsignale (I, Q) demoduliert wird, wobei die Basisbandsignale in einen Wechselspannungsanteil und einen Gleichspannungsanteil aufgeteilt werden, wobei der jeweilige Wechselspannungsanteil mittels eines Hochpassfilters gefiltert und optional verstärkt wird und der jeweilige Gleichspannungsanteil optional eine Offsetkompensation erfährt, wobei zumindest ein Wechselspannungsanteil einer Dopplerauswertung zugeführt wird, um bewegte Objekte zu ermitteln und zumindest ein Gleichspannungsanteil einer Nahbereichspräsenzerkennung zugeführt wird, um statische Objekte zu ermitteln. Dadurch kann sowohl ein statisches als auch ein dynamisches Objekt detektiert werden, wie insbesondere auch sehr nah am Näherungssensor selbst.

Auch ist es vorteilhaft, wenn zumindest eine zweite Empfangsantenne zum Empfangen eines zweiten Empfangssignals vorgesehen ist, wobei das zweite Empfangssignal mittels eines I/Q-Demodulators in die zweiten Basisbandsignale (I, Q) demoduliert wird, wobei ein Gleichspannungsanteil der zweiten Basisbandsignale betrachtet wird, wobei der jeweilige Gleichspannungsanteil optional eine Offsetkompensation erfährt, wobei zumindest ein Gleichspannungsanteil der zweiten Basisbandsignale einer Nahbereichspräsenzerkennung zugeführt wird, um statische Objekte zu ermitteln. Dadurch wird beispielsweise auch eine Gestenerkennung ermöglicht, bei der insbesondere mittels einer Hand Bewegungen in der Nähe des Näherungssensors vollführt werden.

Weiterhin ist es vorteilhaft, wenn zumindest eine dritte Empfangsantenne zum Empfangen eines dritten Empfangssignals vorgesehen ist, wobei das dritte Empfangssignal mittels eines I/Q-Demodulators in die dritten Basisbandsignale (I, Q) demoduliert wird, wobei ein Gleichspannungsanteil der dritten Basisbandsignale betrachtet wird, wobei der jeweilige Gleichspannungsanteil optional eine Offsetkompensation erfährt, wobei zumindest ein Gleichspannungsanteil der dritten Basisbandsignale einer Nahbereichspräsenzerkennung zugeführt wird, um statische Objekte zu ermitteln. Auch dadurch wird beispielsweise eine Gestenerkennung ermöglicht, bei der insbesondere mittels einer Hand Bewegungen in der Nähe des Näherungssensors vollführt werden.

Weiterhin ist es vorteilhaft, wenn bei dem zweiten Empfangskanal und/oder bei dem dritten Empfangskanal auch die zweiten und/oder dritten Basisbandsignale in einen Wechselspannungsanteil und einen Gleichspannungsanteil aufgeteilt werden, wobei der jeweilige Wechselspannungsanteil mittels eines Hochpassfilters gefiltert und optional verstärkt wird und der jeweilige Gleichspannungsanteil optional eine Offset-Kompensation erfährt, wobei optional zumindest ein Wechselspannungsanteil einer Dopplerauswertung zugeführt wird, um bewegte Objekte zu ermitteln und zumindest ein Gleichspannungsanteil einer Nahbereichspräsenzerkennung zugeführt wird, um statische Objekte zu ermitteln. Dadurch können auch bewegte Objekte derart detektiert werden, dass der Winkel der Bewegung relativ zum Näherungssensor bestimmbar ist. So kann die Bewegung des bewegten Objekts genauer bestimmt werden. Dabei ist es auch vorteilhaft, wenn die Erkennung statischer Objekte in einem ersten vordefinierten Raumbereich, wie einem Schaltbereich, erfolgt. So kann erreicht werden, dass Objekte in einem überwachten Raumbereich sicher als vorhanden überwacht werden können. Dabei ist, je nach Anwendungsfall, der so genannte Schaltbereich zu definieren und der Näherungssensor ist entsprechend auszulegen.

Besonders vorteilhaft ist es, wenn die Erkennung bewegter Objekte in einem zweiten vordefinierten Raumbereich erfolgt. Damit wird der Raumbereich definiert, in welchem Objekte detektiert werden können, welche in Bewegung sind. Dieser Raumbereich kann sich von dem ersten Raumbereich unterscheiden und insbesondere auch größer sein.

Auch ist es vorteilhaft, wenn der zweite vordefinierte Raumbereich größer oder gleich ist als der erste vordefinierte Raumbereich und den ersten vordefinierten Raumbereich mit umfasst. So wird erreicht, dass statische Objekte in dem Schaltbereich sicher detektiert werden können und gegebenenfalls eine Annäherung in den Schaltbereich aber bereits detektiert wird.

Auch ist es vorteilhaft, wenn mittels der Dopplerauswertung zumindest einzelne Geschwindigkeitsanteile oder alle Geschwindigkeitsanteile des Objekts ermittelbar sind, wobei zumindest ein entsprechendes Sensorsignal zur Signalisierung zumindest eines bewegten Objekts erzeugt wird.

So ist es auch vorteilhaft, wenn mittels der Nahbereichspräsenzerkennung ein Vorhandensein eines Objekts im ersten vordefinierten Raumbereich erfolgt. So können verschiedene Ansteuerungen beispielsweise von Vorrichtungen veranlasst werden, wenn ein Objekt als vorliegend erkannt ist.

Weiterhin ist es vorteilhaft, wenn mittels der Nahbereichspräsenzerkennung eine Ausdehnung eines Objekts im ersten vordefinierten Raumbereich bestimmbar ist. Aus der Information der Ausdehnung kann beispielsweise auch eine Plausibilisierung vorgenommen werden, ob eine vorgesehene Ansteuerung vorgenommen werden soll oder es sich bei dem erkannten Objekt um ein Artefakt handelt.

Auch ist es vorteilhaft, wenn aufgrund der ermittelten Ausdehnung und/oder aufgrund des ermittelten Vorhandenseins zumindest ein entsprechendes Sensorsignal zur Signalisierung zumindest eines statischen Objekts im ersten vordefinierten Raumbereich erzeugt wird. Aufgrund dieses Sensorsignals kann dann eine entsprechende Ansteuerung oder Maßnahme erfolgen.

Auch ist es vorteilhaft, wenn auf Basis zumindest eines Sensorsignals zur Signalisierung zumindest eines statischen Objekts und/oder zumindest eines Sensorsignals zur Signalisierung zumindest eines bewegten Objekts eine Ansteuerung einer Vorrichtung durchführbar ist.

Die Aufgabe zur Vorrichtung wird mit den Merkmalen von Anspruch 10 gelöst.

Ein Ausführungsbeispiel der Erfindung betrifft eine Vorrichtung mit zumindest einem ansteuerbaren Element, wobei die Vorrichtung einen Näherungssensor nach einem der vorhergehenden Ansprüche aufweist, wobei auf Basis zumindest eines Sensorsignals zur Signalisierung zumindest eines statischen Objekts und/oder zumindest eines Sensorsignals zur Signalisierung zumindest eines bewegten Objekts eine Ansteuerung des ansteuerbaren Elements durchführbar ist.

Dabei ist es ebenfalls vorteilhaft, wenn die Vorrichtung und/oder das ansteuerbare Element bei Vorliegen eines Sensorsignals zur Signalisierung zumindest eines bewegten Objekts im zweiten vordefinierten Raumbereich, in einen ersten Betriebszustand ansteuerbar ist bzw. sind.

Auch ist es vorteilhaft, wenn die Vorrichtung und/oder das ansteuerbare Element bei Vorliegen eines Sensorsignals zur Signalisierung zumindest eines bewegten Objekts im ersten vordefinierten Raumbereich und/oder bei Vorliegen eines Sensorsignals zur Signalisierung zumindest eines statischen Objekts im ersten vordefinierten Raumbereich in einen zweiten Betriebszustand ansteuerbar ist. So kann der Betriebszustand in Abhängigkeit der Sensorsignale des Näherungssensors gesteuert werden.

Auch ist es vorteilhaft, wenn die Vorrichtung ein Getränkeautomat oder eine Beleuchtungsvorrichtung mit zumindest einem Lichtelement ist.

Die Aufgabe zur Vorrichtung wird mit den Merkmalen von Anspruch 13 gelöst.

Ein Ausführungsbeispiel der Erfindung betrifft dabei eine Vorrichtung als Getränkeautomat mit zumindest einem erfindungsgemäßen Näherungssensor.

Der Getränkeautomat ist vorteilhaft ein Automat zur Herstellung von Heiß- und/oder Kaltgetränken, wie insbesondere von Kaffeegetränken.

Auch ist der Getränkeautomat derart steuerbar, dass er in einem Betriebszustand ein Getränkeprodukt nur dann ausgibt, wenn sich ein Gefäß, wie beispielsweise eine Tasse, im Auslassbereich des Getränkeautomaten befindet.

Auch ist es vorteilhaft, wenn der Getränkeautomat von einem ersten Betriebsmodus in einen zweiten Betriebsmodus umschaltet, sobald erkannt wird, dass eine Person auf den Getränkeautomat zuläuft.

So ist es auch vorteilhaft, wenn der Getränkeautomat von einem Energiesparmodus in einen betriebsbereiten Modus umschaltet, wenn ein entsprechendes Sensorsignal eine entsprechende Ansteuerung veranlasst.

Besonders vorteilhaft ist es, wenn der Getränkeautomat derart angesteuert wird, dass abhängig von einem Sensorsignal Informationen an einer Anzeige angezeigt werden.

Weiterhin kann die Vorrichtung auch als Beleuchtungsvorrichtung ausgebildet sein, wobei zumindest ein Näherungssensor vorgesehen ist, wobei zumindest ein Lichtelement vorgesehen ist, welches ansteuerbar ist, wobei in einem Betriebszustand beispielsweise eine reduzierte Helligkeit, beispielsweise etwa 30% der maximalen Helligkeit, ansteuerbar ist und in einem anderen Betriebszustand die Helligkeit des Lichtelements auf eine maximale Helligkeit ansteuerbar ist.

Auch betrifft die Erfindung ein Verfahren zum Betreiben einer erfindungsgemäßen Vorrichtung.

Weitere vorteilhafte Ausgestaltungen sind durch die nachfolgende Figurenbeschreibung und durch die Unteransprüche beschrieben.

### Kurze Beschreibung der Zeichnungen

Nachstehend wird die Erfindung auf der Grundlage zumindest eines Ausführungsbeispiels anhand der Zeichnungen näher erläutert. Es zeigen:
- Fig. 1: ein Diagramm einer Schaltung eines Näherungssensors,
- Fig. 2: eine Darstellung zur Erläuterung der Erfindung,
- Fig. 3: ein Diagramm einer Schaltung eines Näherungssensors,
- Fig. 4: eine Darstellung zur Erläuterung der Erfindung,
- Fig. 5: eine Darstellung eines Getränkeautomaten zur Erläuterung der Erfindung,
- Fig. 6: eine Darstellung eines Getränkeautomaten zur Erläuterung der Erfindung,
- Fig. 7: eine Darstellung einer Bewegung einer Hand zur Gestensteuerung zur Erläuterung der Erfindung bezüglich einer Gestenerkennung,
- Fig. 8: eine Darstellung einer Bewegung einer Hand zur Gestensteuerung zur Erläuterung der Erfindung bezüglich einer Gestenerkennung,
- Fig. 9: eine Darstellung eines Raumbereichs eines Getränkeautomaten zur Erläuterung der Erfindung,
- Fig. 10: eine Darstellung eines Raumbereichs eines Getränkeautomaten zur Erläuterung der Erfindung, und
- Fig. 11: eine Darstellung eines Raumbereichs eines Getränkeautomaten zur Erläuterung der Erfindung.

### Bevorzugte Ausführung der Erfindung

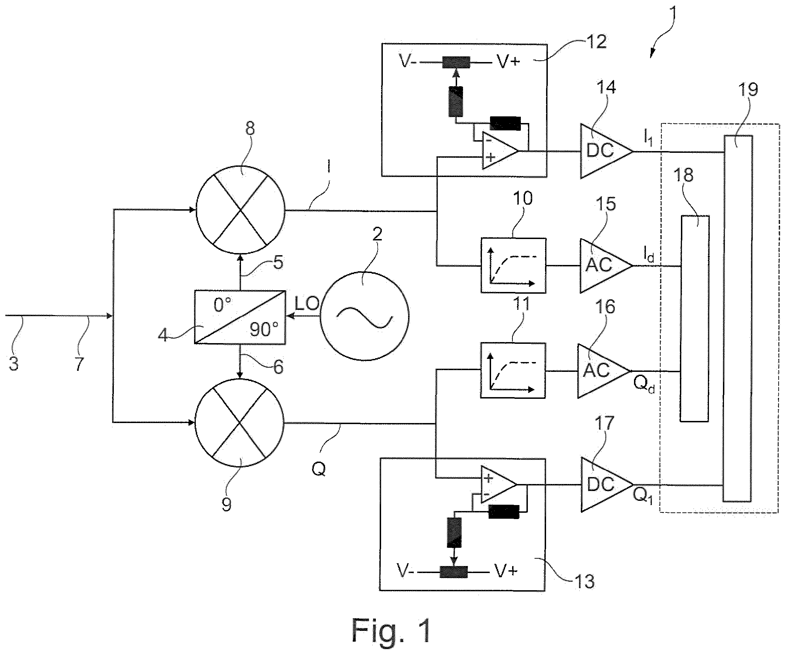

Die Figur 1 zeigt ein Diagramm eines radarbasierten Näherungssensors 1.

Hinsichtlich der Erkennung von Objekten, wie beispielsweise unbewegliche Objekte oder nur schwach bewegliche Objekte, die sich nicht wesentlich auf den radarbasierten Näherungssensor 1 zu bewegen oder sich auch nicht wesentlich von ihm weg bewegen, sind gemäß den obigen Ausführungen die niederfrequenten Spektralanteile besonders wichtig.

Entsprechend sind für Applikationen, wie beispielsweise für zuverlässige, intelligente, berührungslose Näherungsschalter oder Näherungssensoren für verschiedene Vorrichtungen, so genannte MMI (Man-Maschine-Interface), die niederfrequenten Signale und die DC-Signale relevant. Insbesondere statische Objekte, auch Ziele genannt, sowie Hand- und/oder Fingergesten im Nahbereich des Näherungssensors 1 sind insbesondere im untersten Frequenzbereich des Doppler-Spektrums zu erkennen. Eine Hochpassfilterung würde die zuverlässige Erkennung solcher Gesten und statischer Objekte verhindern.

Der Näherungssensor der Figur 1 weist einen Signalgenerator 2 und einen Empfangspfad 3 auf. Der Signalgenerator 2 erzeugt ein Referenzsignal LO und der Empfangspfad 3 weist das Empfangssignal auf. Das Empfangssignal 7 wird mit einem I/Q-Demodulator demoduliert, wobei sowohl dem Signal 5 als auch dem Signal 6 das Empfangssignal 7 mittels der Mischer 8, 9 zugemischt werden.

Anschließend werden die Basisbandsignale I, Q jeweils für den AC-Anteil mittels eines Hochpassfilters 10, 11 für den AC-Anteil des I-Signals und für den AC-Anteil des Q-Signals gefiltert. Der DC-Anteil wird nicht hochpassgefiltert, sondern lediglich mit einer Offset-Kompensation 12, 13 kompensiert. Anschließend werden die gefilterten AC-Anteile und DC-Anteile mittels optionaler Verstärker 14, 15, 16, 17 verstärkt, so dass die Signale Iₗ, I_{d}, Q_{d} und Qₗ resultieren.

Mit den Signalen I_{d}, und Q_{d} wird eine Dopplerauswertung 18 durchgeführt, zur Ermittlung von Geschwindigkeitsanteilen und aus den Signalen Iₗ und Qₗ wird eine Nahbereichspräsenzerkennung 19 durchgeführt.

Die Basisbandsignale I, Q können entsprechend ohne Hochpassfilterung und auch ohne Basisbandverstärkung analysiert werden. Der beim traditionellen Doppler-Radar unerwünschte Bias-Effekt schlägt somit durch die NF Signalkette und wird von der Auswertelogik beobachtet, um statische Ziele zu erkennen. Niederfrequente Signale sind damit gut zu erkennen. Somit sind statische und sich langsam bewegende Ziele im Nahbereich des Näherungssensors detektierbar. Der inhärente Bias verursacht durch gegebene TX/RX-Überkopplung ein natives Offset der Basisbandsignale und kann beispielsweise am Ende des Produktionsprozesses kalibriert werden, siehe die Offset-Kompensation 12, 13. Alternativ oder zusätzlich dazu kann auch eine rechnerische Kompensation erfolgen, beispielsweise in der digitalen Domäne.

Eine Detektion von bewegten Zielen, insbesondere auch weiter weg vom Näherungssensor, wird mittels Hochpassfilterung und optionaler Basisbandverstärkung durchgeführt.

Gemäß dem erfindungsgemäßen Gedanken wird vorgeschlagen, die Basisbandsignale, also insbesondere parallel mit zwei Auswertevorrichtungen bzw. Auswerteverfahren, zu untersuchen.

Um die Nahbereichsdetektion von statischen und langsamen Zielen zu ermöglichen, werden nach dem Mischprozess die Basisbandsignale insbesondere ohne Verstärkung und ohne Filterung ausgewertet.

Ein zusätzlicher Auswertepfad mit Filterung und Verstärkung ermöglicht weiterhin eine Detektion von bewegten Objekten als Ziele.

Gemäß der Erfindung kann ein erfindungsgemäßer Näherungssensor zur Detektion von manuellen Gesten und/oder Bewegungen über den Sensor oder an dem Sensor vorbei bzw. nahe dem Sensor verwendet werden. Hierzu sind vorteilhaft ebenso mehrere Empfangskanäle bzw. Auswertepfade nötig. Bewegungen beispielsweise einer Hand oder zumindest eines Fingers oder mehrere Finger hin und weg vom Sensor sind mittels einer komplexen Auswertung der Mikrodoppler-Signatur der Handgeste identifizierbar. Wischbewegungen am Sensor vorbei oder über den Sensor sind mittels Auswertung von mehreren Empfangskanälen zu erkennen. Phasendifferenzinformation sowie symmetrische Doppler-Frequenzunterschiede im Spektrum zwischen verschiedenen Empfangskanälen liefern die Information über seitliche Bewegungen des Ziels, wie beispielsweise einer Hand. Hiermit kann beispielsweise eine einfache Gestenerkennung für Handwischbewegungen durchgeführt werden. Allerdings sind auch komplexere Bewegungen mittels Mustererkennungsalgorithmen über eine mehrkanalige Spektrogrammanalyse in der digitalen Signalverarbeitung hilfreich und durchführbar.

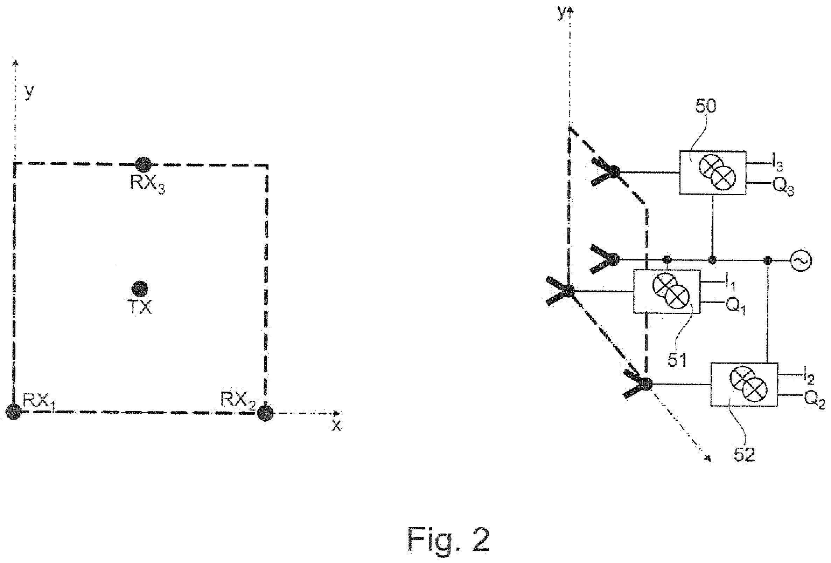

Die Figur 2 zeigt schematisch ein mehrkanaliges komplexes Empfängerkonzept mit geometrischer Anordnung der Empfangskanäle RX₁, RX₂ und RX₃ auf einer x,y-Ebene. Mittels Phasendetektion zwischen den einzelnen Empfangskanälen RX₁, RX₂ und RX₃ sowie Symmetrien von Frequenzkomponenten im komplexen Spektrum ist es möglich, Gesten vor dem Sensor zu detektieren. Dabei sind Gesten üblicherweise Bewegungen einer Hand in einer bestimmten Art und Weise. Dabei zeigt die linke Teilfigur der Figur 2 die Anordnung der Empfangskanäle in der x,y-Ebene in Relation zum Sendekanal TX, wobei die rechte Teilfigur der Figur 2 eine Verschaltung der drei Empfangskanäle RX₁, RX₂ und RX₃ mittels Mischern 50, 51, 52 zeigt.

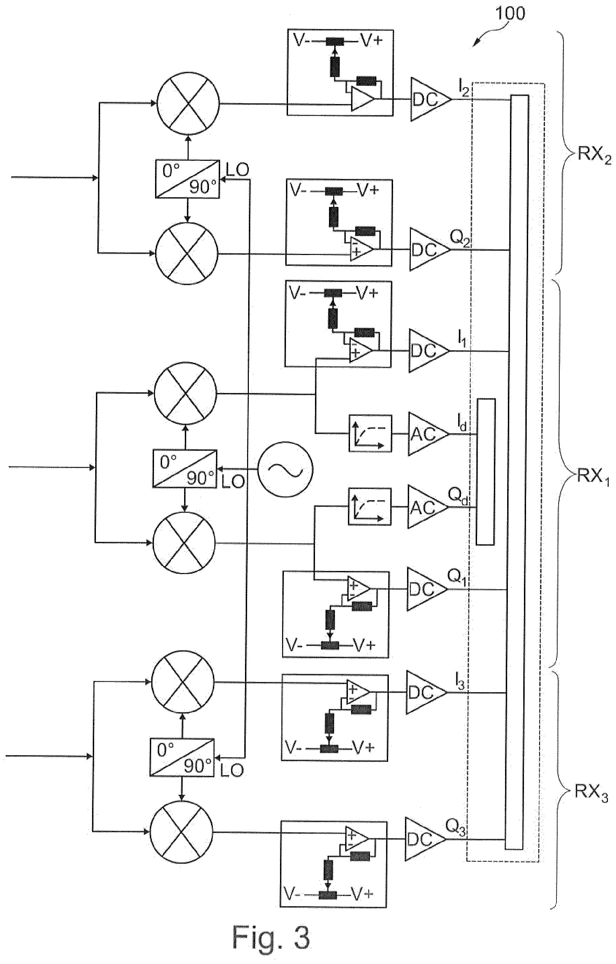

Die Figur 3 zeigt in einer schematischen Darstellung einen vorgeschlagenen Aufbau eines Näherungssensors 100 mit Bewegungsdetektion und mit Nahbereichserkennung, sowie zur Gestenerkennung. Dabei sind drei komplexe Empfangspfade RX₁, RX₂ und RX₃ vorgesehen, welche eine Erkennung von Handbewegungen hin und weg vom Sensor sowie Wischbewegungen über den Sensor ermöglichen. Alternativ können auch nur zwei Empfangspfade oder gegebenenfalls auch mehr als drei Empfangspfade vorgesehen sein, was jedoch nicht dargestellt ist. Die Verschaltung des Empfangspfads RX₁ gemäß Figur 3 entspricht dabei der Verschaltung gemäß Figur 1. Parallel zu dem Empfangspfad RX₁ sind zwei weitere Empfangspfade RX₂ und RX₃ vorgesehen. Diese Empfangspfade RX₂ und RX₃ sind allerdings nicht wie der Empfangspfad RX₁ mit einem AC-Pfad und einem DC-Pfad in den Basisbändern versehen, sondern nur mit einem DC-Pfad für die Erkennung statischer bzw. quasistatischer Objekte oder Ziele. Die diesbezügliche Verschaltung der DC-Pfade entspricht dabei wieder der entsprechenden Darstellung gemäß Figur 1.

Gemäß einem weiteren Ausführungsbeispiel können die Empfangspfade RX₂ und RX₃ auch zusätzlich einen AC-Pfad aufweisen, so dass damit auch die bewegten Objekte detektiert werden können. Dies ist beispielsweise vorteilhaft, um eine Winkelbestimmung des bewegten Objekts relativ zum Näherungssensor bestimmen zu können.

Der oben vorgeschlagene Näherungssensor kann für verschiedenste Anwendungen eingesetzt werden. Im Folgenden werden einige Anwendungsbeispiele dargestellt, um die Vorteile des Näherungssensors zu erläutern. Dabei ist die Anwendung des Näherungssensors nicht auf die nachfolgend beschriebenen Anwendungen beschränkt, sondern er kann auch bei anderen Anwendungen bzw. in anderen Vorrichtungen eingesetzt werden.

Ein Einsatzbereich des berührungslosen Näherungssensors, auch Näherungsschalter genannt, kann in der Absicherung von Maschinenelementen, Positionierungshilfen bzw. einer Positionsjustage von Objekten bzw. Zielen in Maschinen usw. liegen. Dabei ist es vorteilhaft, dass eine gleichzeitige Erkennung von bewegten Zielen als auch von statischen Zielen im sogenannten Schaltbereich des Näherungssensors erfolgt. Dabei ist der Schaltbereich ein definierter Raumbereich vor dem Näherungssensor, in welchem die Objekte bzw. Ziele detektierbar sind. Der Schaltbereich liegt dabei im Nahbereich des Näherungssensors. Vorteilhaft kann es dabei auch sein, wenn optional eine Detektion von bewegten Objekten oder Zielen auch außerhalb des Schaltbereichs, also in einem erweiterten Detektionsbereich, erfolgen kann. Vorteilhaft ist weiterhin, wenn der Näherungssensor zwischen den statischen Zielen bzw. Objekten und den dynamischen Zielen bzw. Objekten unterscheiden kann, also aufgrund von Sensorsignalen des Näherungssensors zwischen den beiden Ereignisarten unterschieden werden kann.

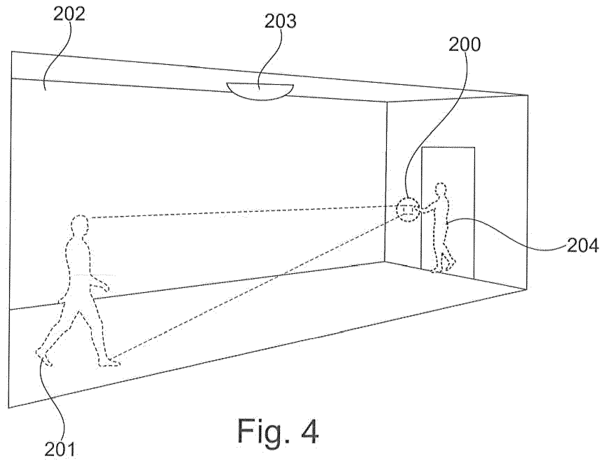

Eine mögliche Anwendung des Näherungssensors 200 ist eine Anwendung als intelligenter berührungsloser Lichtschalter auf Radarbasis. Dabei kann der Näherungssensor 200 in einer Lichtschalteranwendung beispielsweise zwei Betriebsmodi unterscheiden und zumindest ein Lichtelement entsprechend ansteuern. Eine komplexe Dopplersignalauswertung der Empfangssignale ermöglicht dabei eine Erkennung beispielsweise von zumindest einer Person 201 in einem Raum 202, in welchem der Näherungssensor 200 angeordnet ist, wobei die zumindest eine Person 201 in einer Richtung hin zu einem als Lichtschalter dienenden Näherungssensor 200 läuft, siehe Figur 4. Aufgrund dieser Erkennung der Person 201 kann beispielsweise ein erster Betriebsmodus eines Lichtelements 203 angesteuert werden. In dem Fall kann zum Beispiel das Licht des Lichtelements 203 auf reduzierte Helligkeit, beispielsweise etwa 30% der maximalen Helligkeit, eingestellt und eingeschaltet werden, um eine allgemeine, energiesparende Raumbeleuchtung zu gewährleisten.

Sobald eine Person 204 beispielsweise ihre Hand in der Nähe, also in den Schaltbereich, des als Schalter dienenden Näherungssensors 200 positioniert, wird ein zweiter Betriebsmodus aktiviert und es würde aufgrund der Nahbereichserkennung die Helligkeit des Lichtelements auf 100% erhöht werden.

Der Näherungssensor dient somit nicht nur als Bewegungsmelder in dem erwähnten Raum, sondern dient auch als berührungslos arbeitender Lichtschalter. Dieser kann dabei in einer Wand, im Putz oder hinter einer Abdeckung eingebaut werden. Es ist ebenso möglich, eine aufwendige Installation und Verkabelung von zusätzlichen Bewegungsmeldern im Raum zu vermeiden.

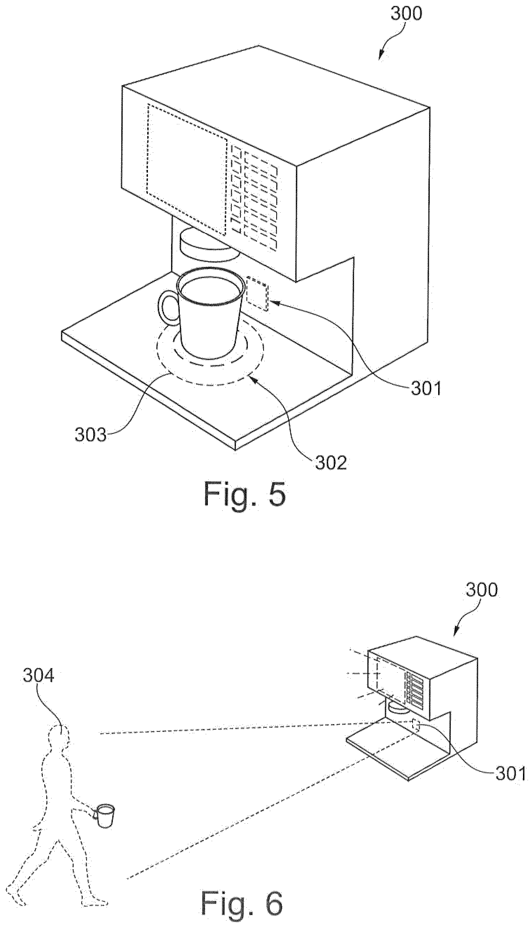

Eine weitere Anwendung ist eine Tassenerkennung in einem Getränkeautomaten 300, siehe Figur 5. In einem Anwendungsbeispiel für die Erkennung von statischen Zielen in einem Nahbereich kann der Schaltbereich 303 des Näherungssensors 301 als solcher Nahbereich definiert werden. Mittels eines solchen Näherungssensors ist es entsprechend möglich, einen Getränkeautomaten, wie beispielsweise eine Kaffeemaschine, so zu steuern, dass der Getränkeautomat ein Getränkeprodukt nur dann ausgibt, wenn sich eine Tasse 302 im Auslassbereich des Getränkeautomaten 300 befindet. Entsprechend ist zu detektieren, ob sich ein relevantes Objekt im Schaltbereich des Näherungssensors 301 befindet. Dieser definierte Nahbereich kann beispielsweise mittels eines Schwellenwertes des DC-Anteils im Basisband definiert werden. Statische Gegenstände im Nahbereich des Näherungssensors, wie in diesem Beispiel eine Tasse, sind ja wie oben ausgeführt, nur mittels DC-Signalauswertung detektierbar. Mittels Dopplersignalauswertung ist es beispielsweise möglich, eine Person 304 zu detektieren, die auf den Getränkeautomaten 300, wie die Kaffeemaschine, zuläuft, siehe Figur 6.

Dadurch ist es möglich, dass aufgrund der unterscheidbaren Erkennung von beweglichen Objekten und statischen Objekten auch weitere Funktionen mit dem gleichen Näherungssensor abgedeckt werden können. Zum Beispiel kann, sobald eine Person 304 zu dem Getränkeautomaten 300 läuft, der Getränkeautomat 300 von einem ersten Betriebsmodus in einen zweiten Betriebsmodus umgeschaltet werden. So kann der Getränkeautomat 300 beispielsweise von einem Energiesparmodus in einen betriebsbereiten Modus umgeschaltet, wie aufgeweckt, werden. Dadurch ist die Bereitung eines Getränks wesentlich schneller durchgeführt, weil Wartezeiten reduziert werden oder entfallen. Zudem können verschiedene Informationen, wie Werbung, eine Begrüßungsnachricht etc. an einer Anzeige, wie auf einem Display, angezeigt werden, wenn ein etwaiger Benutzer 304 zu dem Getränkeautomaten 300 hinläuft oder von diesem wegläuft.

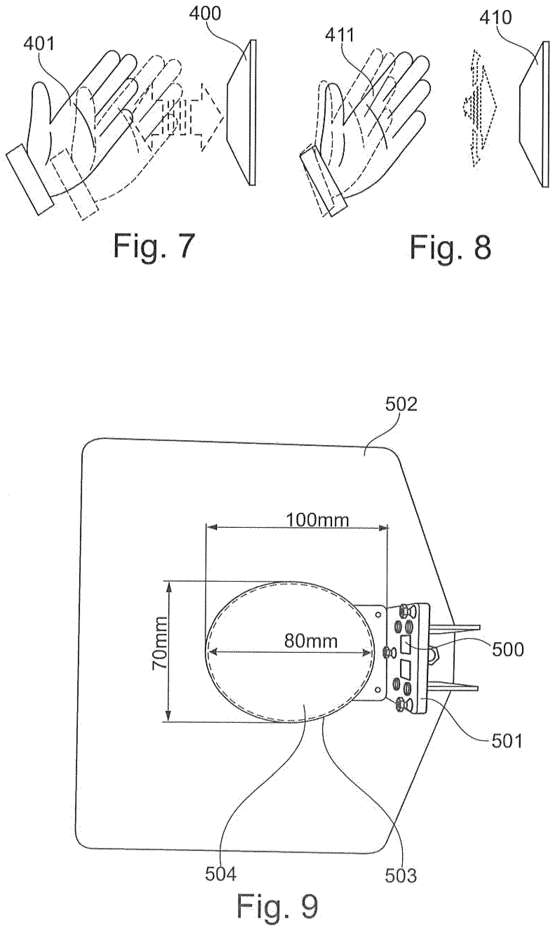

Auch kann mittels des Näherungssensors eine Gestenerkennung, wie beispielsweise eine Handgestenerkennung, durchgeführt werden. Die Gestenerkennung ist dabei für verschiedene Applikationsfelder besonders interessant und hilfreich. Eine mögliche Anwendung wäre beispielsweise die Erkennung von Wischbewegungen mit der Hand an einem Lichtschalter, wie insbesondere direkt vor dem Näherungssensor, um die Helligkeit des Lichtes anzupassen. Die Figuren 7 und 8 zeigen dabei mögliche Wischbewegungen einer Hand 401 bzw. 411 vor einem Näherungssensor 400, 410. In Figur 7 wird die Hand 401 auf den Näherungssensor 400 zu bewegt bzw. von ihm weg bewegt. So können einfache Wischbewegungen mittels der Dopplerauswertung erkannt werden. In Figur 8 wird die Hand 411 seitlich zu dem Näherungssensor bewegt, wie von rechts nach links und umgekehrt und/oder von oben nach unten und umgekehrt. So können ebenfalls einfache Wischbewegungen mittels der Dopplerauswertung erkannt werden. Damit kann eine Art berührungsloser Dimmer realisiert werden. Der Näherungssensor erkennt die Bewegungen der Hand und der Näherungssensor gibt ein entsprechendes Signal aus, welches zur Steuerung eines Lichtelements genutzt wird, um seine Helligkeit entsprechend zu steuern.

Die Figur 9 zeigt in einem Beispiel einer Anordnung eines Näherungssensors, wie beispielsweise eine Tassenerkennung als Erkennung statischer Objekte für einen Getränkeautomaten umsetzbar ist.

Für die grundlegende Aufgabenstellung einer Präsenzdetektion von statischen Zielen in einem Nahbereich wurden die entsprechenden Anforderungen hinsichtlich der Applikation "Tassenerkennung" definiert. Die Anforderungen und die resultierenden Ergebnissen sind allerdings auch auf verschiedene weitere Applikationen übertragbar.

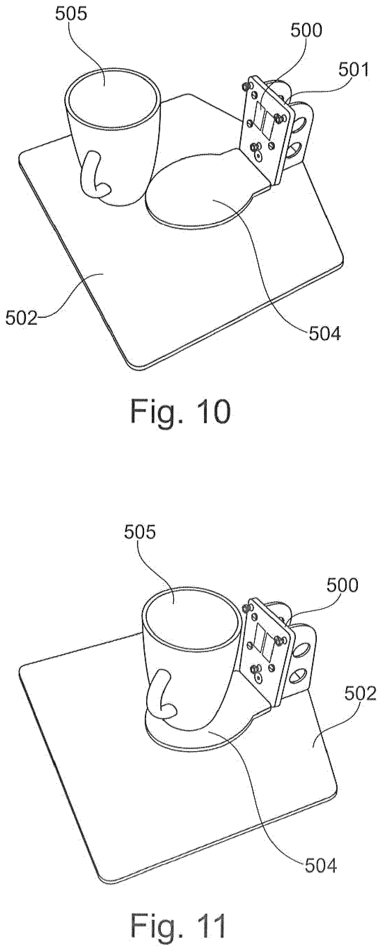

Die Figur 9 zeigt eine Anordnung eines Näherungssensors 500, welcher an einer Halterung 501 über einer Grundplatte 502 angeordnet ist. Es ist ein Detektionsbereich 503 definiert, welcher als ovale Fläche bzw. als ovaler Bereich definiert ist. Der maximale Abstand für eine Detektion eines statischen Objekts zum Näherungssensor 500 beträgt 100 mm, die Tasse soll innerhalb eines Auslassbereichs 504, wie eine 70 mm x 80 mm große Ellipse, detektiert werden. Der angewendete Näherungssensor 500 ist in eine Höhe von circa 5 cm über der Grundplatte 502 montiert und beobachtet in azimutaler Richtung den Detektionsbereich 503. Bei der Erkennung von Objekten sollen möglichst zwei Zustände eindeutig erkannt werden können:
- ein Objekt 505, wie eine Tasse, ist außerhalb des Auslassbereichs 504, siehe Figur 10, oder
- ein Objekt 505 ist innerhalb des Auslassbereichs 504, siehe Figur 11.

Die Erkennung von statischen Objekten 505 im Nahbereich des Näherungssensors soll dabei möglichst unempfindlich gegenüber Temperaturschwankungen sein, weil diese gegebenenfalls auftreten könnten und das Detektionsergebnis nicht beeinflussen sollten. Die Erkennung von Objekten soll dabei vorteilhaft in einem Temperaturbereich zwischen -30 °C und +70 °C zuverlässig funktionieren. Eine initiale Kalibrierung, wie ein NullAbgleich der Signale für ein Szenario ohne Ziel bei Raumtemperatur, kann dabei beispielsweise bei einer Kalibration am Fertigungsbandende durchgeführt werden. Auch können mögliche toleranzbedingte Schwankungen im Detektionsergebnis berücksichtigt werden. Die Erkennung der genannten zwei Zustände soll zuverlässig auch bei verschiedenen Sensoren aus der Herstellserie funktionieren.

Als Energiesparmaßnahme kann die Objektdetektion in dem vordefinierten Nahbereich, beispielsweise im Pulsbetrieb, erfolgen. Alternativ kann die Detektion auch in einem Dauerstrichbetrieb erfolgen. Im Pulsbetrieb kann die Zykluszeit im Millisekundenbereich liegen und beispielsweise etwa 1 ms betragen.

Der Näherungssensor kann bei der Anordnung in bzw. an einem Gerät oder einer Vorrichtung beispielsweise hinter eine Abdeckung montiert werden, wie beispielsweise hinter einer Schutzkappe oder Platte. Diese kann vorteilhaft aus Kunststoff ausgebildet sein.

Die Änderung der Detektionsperformance soll deswegen für verschiedene Abdeckungsmaterialien (Radome) evaluiert werden. Zudem sollen leichte Abstandsvariationen zwischen Sensormodul und Kunststoffabdeckungen getestet werden, um fehlerhafte oder nicht optimale Installationen zu simulieren. Verwendet wurden testweise folgende Materialien: Bakelit mit einer Stärke von 2 mm, Plexiglas mit einer Stärke von 1 mm, PVC mit einer Stärke von 4 mm, ein Witcom-Absorber mit einer Stärke von 6,1 mm, Lanxess Pocan A3122 (PBT + ASA + GF 20%) mit einer Stärke von 2,9 mm, PU mit einer Stärke von 2 mm und KLS (3D-Sinterdruck) mit einer Stärke von 1,9 mm. Dabei können auch andere Materialien und Stärken verwendet werden.

Der Abstand zwischen der Abdeckung und dem Näherungssensor kann im Millimeterbereich liegen, wie insbesondere bei 3, 4, 5 und 6 mm. Auch andere Abstände abseits oder zwischen den genannten Abständen sind möglich.

Gemäß der Erfindung kann eine erfindungsgemäße Vorrichtung eine Vorrichtung sein, die in einem vordefinierten Zustand befindlich sein kann und einen erfindungsgemäßen Näherungssensor aufweist, wobei bei Annäherung einer Person an die Vorrichtung diese die Annäherung erkennt und aufgrund der Annäherung aufgrund eines Sensorsignals des Näherungssensors in einen anderen Betriebszustand ansteuerbar ist. So kann die Vorrichtung zuvor in einem Ruhezustand oder in einem Energiesparmodus, auch Standby-Modus genannt, sein, wobei die Vorrichtung nach erkennen einer Annäherung in einen ersten betriebsbereiten Modus ansteuerbar ist. Entsprechend wird das Sensorsignal des Näherungssensors dazu verwendet, die Vorrichtung zu aktivieren. Beispiele für solche Vorrichtungen sind beispielsweise auch Kopiergeräte, Fahrkartenautomaten etc.

Auch kann eine erfindungsgemäße Vorrichtung eine Schließvorrichtung sein, die "schlüssellos" arbeitet, auch Keyless-Entry-System genannt. Dabei kann bei erkannter Annäherung einer Person die Schließvorrichtung in einen aktiven Zustand angesteuert werden, bei welcher bei Annäherung die Datenkommunikation zwischen der Schließvorrichtung und dem elektronischen Schlüssel beginnt, um gegebenenfalls eine Tür o.Ä. zu entriegeln.

### Bezugszeichenliste

- 1: Näherungssensor
- 2: Signalgenerator
- 3: Empfangspfad
- 5: I-Signal
- 6: Q-Signal
- 7: Empfangssignal
- 8: Mischer
- 9: Mischer
- 10: Hochpassfilter
- 11: Hochpassfilter
- 12: Offset-Kompensation
- 13: Offset-Kompensation
- 14: Verstärker
- 15: Verstärker
- 16: Verstärker
- 17: Verstärker
- 18: Dopplerauswertung
- 19: Nahbereichspräsenzerkennung
- 50: Mischer
- 51: Mischer
- 52: Mischer
- 100: Näherungssensor
- 200: Näherungssensor
- 201: Person
- 202: Raum
- 203: Lichtelement
- 204: Person
- 300: Getränkeautomat
- 301: Näherungssensor
- 302: Tasse
- 303: Schaltbereich
- 304: Person
- 400: Näherungssensor
- 401: Hand
- 410: Näherungssensor
- 411: Hand
- 500: Näherungssensor
- 501: Halterung
- 502: Grundplatte
- 503: Detektionsbereich
- 504: Auslassbereich
- 505: Objekt

## Patentansprüche

1. Radarbasierter Näherungssensor (1, 100, 200, 301, 400, 410, 500) mit einer Sendeantenne zum Senden eines Ausgangssignals (LO) und mit zumindest einer ersten Empfangsantenne zum Empfangen eines ersten Empfangssignals (7), mit einem Signalgenerator (2) zur Erzeugung des Ausgangssignals, wobei das erste Empfangssignal mittels eines I/Q-Demodulators (4, 8, 9) in die Basisbandsignale (I, Q) demoduliert wird, wobei die Basisbandsignale (I, Q) in einen Wechselspannungsanteil (I_{d}, Q_{d}, 15, 16) und einen Gleichspannungsanteil (I₁, Q₁, 14, 17) aufgeteilt werden, wobei der jeweilige Wechselspannungsanteil (I_{d}, Q_{d}, 15, 16) mittels eines Hochpassfilters (10, 11) gefiltert und optional verstärkt wird und der jeweilige Gleichspannungsanteil (I₁, Q₁, 14, 17) optional eine Offset-Kompensation (12, 13) erfährt, wobei zumindest ein Wechselspannungsanteil einer Dopplerauswertung (18) zugeführt wird, um bewegte Objekte (201, 304, 505) zu ermitteln und zumindest ein Gleichspannungsanteil einer Nahbereichspräsenzerkennung (19) zugeführt wird, um statische Objekte (201, 304, 505) zu ermitteln.

2. Näherungssensor (1, 100, 200, 301, 400, 410, 500) nach Anspruch 1, **dadurch gekennzeichnet, dass** zumindest eine zweite Empfangsantenne zum Empfangen eines zweiten Empfangssignals (7) vorgesehen ist, wobei das zweite Empfangssignal mittels eines I/Q-Demodulators (4) in die zweiten Basisbandsignale (I, Q) demoduliert wird, wobei jeweils ein Wechselspannungsanteil und ein Gleichspannungsanteil der zweiten Basisbandsignale (I, Q) betrachtet werden, wobei der jeweilige Wechselspannungsanteil mittels eines Hochpassfilters (10, 11) gefiltert und optional verstärkt wird und der jeweilige Gleichspannungsanteil optional eine Offset-Kompensation (12, 13) erfährt, wobei zumindest ein Wechselspannungsanteil einer Dopplerauswertung (18) zugeführt wird, um bewegte Objekte (201, 304, 505) zu ermitteln und zumindest ein Gleichspannungsanteil einer Nahbereichspräsenzerkennung (19) zugeführt wird, um statische Objekte (201, 304, 505) zu ermitteln.

3. Näherungssensor (1, 100, 200, 301, 400, 410, 500) nach Anspruch 2, **dadurch gekennzeichnet, dass** zumindest eine dritte Empfangsantenne zum Empfangen eines dritten Empfangssignals (7) vorgesehen ist, wobei das dritte Empfangssignal mittels eines I/Q-Demodulators (4, 8, 9) in die dritten Basisbandsignale (I, Q) demoduliert wird, wobei ein Gleichspannungsanteil und ein Wechselspannungsanteil der dritten Basisbandsignale (I, Q) betrachtet werden, wobei der jeweilige Wechselspannungsanteil mittels eines Hochpassfilters (10, 11) gefiltert und optional verstärkt wird und der jeweilige Gleichspannungsanteil optional eine Offset-Kompensation (12, 13) erfährt, wobei zumindest ein Wechselspannungsanteil einer Dopplerauswertung (18) zugeführt wird, um bewegte Objekte (201, 304, 505) zu ermitteln und zumindest ein Gleichspannungsanteil einer Nahbereichspräsenzerkennung (19) zugeführt wird, um statische Objekte (201, 304, 505) zu ermitteln.

4. Näherungssensor nach Anspruch 2 oder 3, **dadurch gekennzeichnet, dass** bei dem zweiten Empfangskanal und/oder bei dem dritten Empfangskanal auch die zweiten und/oder dritten Basisbandsignale (I, Q) in einen Wechselspannungsanteil und einen Gleichspannungsanteil aufgeteilt werden, wobei der jeweilige Wechselspannungsanteil mittels eines Hochpassfilters (10, 11) gefiltert und optional verstärkt wird und der jeweilige Gleichspannungsanteil optional eine Offset-Kompensation (12, 13) erfährt, wobei optional zumindest ein Wechselspannungsanteil einer Dopplerauswertung (18) zugeführt wird, um bewegte Objekte (201, 304) zu ermitteln und zumindest ein Gleichspannungsanteil einer Nahbereichspräsenzerkennung (19) zugeführt wird, um statische Objekte (505) zu ermitteln.

5. Näherungssensor (1, 100, 200, 301, 400, 410, 500) nach einem der vorhergehenden Ansprüche, **dadurch gekennzeichnet, dass** die Erkennung statischer Objekte (505) in einem ersten vordefinierten Raumbereich, wie einem Schaltbereich (303), erfolgt und/oder dass die Erkennung bewegter Objekte (201, 304) in einem zweiten vordefinierten Raumbereich erfolgt.

6. Näherungssensor (1, 100, 200, 301, 400, 410, 500) nach Anspruch 5, **dadurch gekennzeichnet, dass** der zweite vordefinierte Raumbereich größer oder gleich ist als der erste vordefinierte Raumbereich und den ersten vordefinierten Raumbereich mitumfasst.

7. Näherungssensor (1, 100, 200, 301, 400 410, 500) nach einem der vorhergehenden Ansprüche, **dadurch gekennzeichnet, dass** mittels der Dopplerauswertung (18) zumindest einzelne Geschwindigkeitsanteile oder alle Geschwindigkeitsanteile des Objekts (201, 304) ermittelbar sind, wobei zumindest ein entsprechendes Sensorsignal zur Signalisierung zumindest eines bewegten Objekts (201, 304) erzeugt wird und/oder dass mittels der Nahbereichspräsenzerkennung (19) ein Vorhandensein eines Objekts (201, 304, 505) im ersten vordefinierten Raumbereich erfolgt und/oder dass mittels der Nahbereichspräsenzerkennung (19) eine Ausdehnung eines Objekts (201, 304, 505) im ersten vordefinierten Raumbereich bestimmbar ist.

8. Näherungssensor (1, 100, 200, 301, 400, 410, 500) nach Anspruch 7, **dadurch gekennzeichnet, dass** aufgrund der ermittelten Ausdehnung und/oder aufgrund des ermittelten Vorhandenseins zumindest ein entsprechendes Sensorsignal zur Signalisierung zumindest eines statischen Objekts (201, 304, 505) im ersten vordefinierten Raumbereich erzeugt wird.

9. Näherungssensor (1, 100, 200, 301, 400, 410, 500) nach einem der vorhergehenden Ansprüche, **dadurch gekennzeichnet, dass** auf Basis zumindest eines Sensorsignals zur Signalisierung zumindest eines statischen Objekts (505) und/oder zumindest eines Sensorsignals zur Signalisierung zumindest eines bewegten Objekts (201, 304) eine Ansteuerung einer Vorrichtung durchführbar ist.

10. Vorrichtung mit zumindest einem ansteuerbaren Element, wobei die Vorrichtung einen Näherungssensor (1, 100, 200, 301, 400, 410, 500) nach einem der vorhergehenden Ansprüche aufweist, wobei auf Basis zumindest eines Sensorsignals zur Signalisierung zumindest eines statischen Objekts (505) und/oder zumindest eines Sensorsignals zur Signalisierung zumindest eines bewegten Objekts (201, 304) eine Ansteuerung des ansteuerbaren Elements durchführbar ist.

11. Vorrichtung nach Anspruch 10, **dadurch gekennzeichnet, dass** die Vorrichtung und/oder das ansteuerbare Element bei Vorliegen eines Sensorsignals zur Signalisierung zumindest eines bewegten Objekts (201, 304) im zweiten vordefinierten Raumbereich in einen ersten Betriebszustand ansteuerbar ist.

12. Vorrichtung nach Anspruch 10 oder 11, **dadurch gekennzeichnet, dass** die Vorrichtung und/oder das ansteuerbare Element bei Vorliegen eines Sensorsignals zur Signalisierung zumindest eines bewegten Objekts (201, 304) im ersten vordefinierten Raumbereich und/oder bei Vorliegen eines Sensorsignals zur Signalisierung zumindest eines statischen Objekts (505) im ersten vordefinierten Raumbereich in einen zweiten Betriebszustand ansteuerbar ist.

13. Vorrichtung nach einem der vorhergehenden Ansprüche 10 bis 12, **dadurch gekennzeichnet, dass** die Vorrichtung ein Getränkeautomat (300) oder eine Beleuchtungsvorrichtung mit zumindest einem Lichtelement (203) ist.

14. Getränkeautomat (300) als Vorrichtung nach einem der Ansprüche 10 bis 13, wobei der zumindest eine Näherungssensor (1, 100, 200, 301, 400, 410, 500) nach einem der Ansprüche 1 bis 12 vorgesehen ist und/oder der Getränkeautomat (300) ein Automat zur Herstellung von Heiß- und/oder Kaltgetränken ist

15. Beleuchtungsvorrichtung als Vorrichtung nach einem der Ansprüche 10 bis 13, wobei der zumindest eine Näherungssensor (1, 100, 200, 301, 400, 410, 500) nach einem der Ansprüche 1 bis 12 vorgesehen ist, wobei zumindest ein Lichtelement (203) vorgesehen ist, welches ansteuerbar ist, wobei in einem Betriebszustand beispielsweise eine reduzierte Helligkeit, beispielsweise etwa 30 % der maximalen Helligkeit, ansteuerbar ist und in einem anderen Betriebszustand die Helligkeit des Lichtelements (203) auf eine maximale Helligkeit ansteuerbar ist.

## Claims

1. A radar-based proximity sensor (1, 100, 200, 301, 400, 410, 500) with a transmitting antenna for transmitting an output signal (LO) and with at least one first receiving antenna for receiving a first reception signal (7), with a signal generator (2) for generating the output signal, wherein the first reception signal is demodulated into the base band signals (I, Q) by means of an I/Q demodulator (4, 8, 9), wherein the base band signals (I, Q) are separated into an alternating voltage part (I_{d}, Q_{d}, 15, 16) and a direct voltage part (I₁, Q₁, 14, 17), wherein the respective alternating voltage part (I_{d}, Q_{d}, 15, 16) is filtered by means of a high-pass filter (10, 11) and is optionally amplified and the respective direct voltage part (I₁, Q₁, 14, 17) optionally experiences an offset compensation (12, 13), wherein at least one alternating voltage part is supplied to a Doppler evaluation (18) in order to detect moving objects (201, 304, 505) and at least one direct voltage part is supplied to a close range presence detector (19) in order to detect static objects (201, 304, 505).

2. The proximity sensor (1, 100, 200, 301, 400, 410, 500) according to claim 1, **characterised in that** at least one second reception antenna for receiving a second reception signal (7) is provided, wherein the second reception signal is demodulated into the second base band signals (I, Q) by means of an I/Q demodulator (4), wherein an alternating voltage part and a direct voltage part of the second base band signals (I, Q) are considered, respectively, wherein the respective alternating voltage part is filtered by means of a high-pass filter (10, 11) and is optionally amplified and the respective direct voltage part optionally experiences an offset compensation (12, 13), wherein at least one alternating voltage part is supplied to a Doppler evaluation (18) in order to detect moving objects (201, 304, 505) and at least one direct voltage part is supplied to a close range presence detector (19) in order to detect static objects (201, 304, 505).

3. The proximity sensor (1, 100, 200, 301, 400, 410, 500) according to claim 2, **characterised in that** at least one third reception antenna for receiving a third reception signal (7) is provided, wherein the third reception signal is demodulated into the third base band signals (I, Q) by means of an I/Q demodulator (4, 8, 9), wherein a direct voltage part and an alternating voltage part of the third base band signals (I, Q) are considered, wherein the respective alternating voltage part is filtered by means of a high-pass filter (10, 11) and is optionally amplified and the respective direct voltage part optionally experiences an offset compensation (12, 13), wherein at least one alternating voltage part is supplied to a Doppler evaluation (18) in order to detect moving objects (201, 304, 505) and at least one direct voltage part is supplied to a close range presence detector (19) in order to detect static objects (201, 304, 505).

4. The proximity sensor according to claim 2 or 3, **characterised in that** with regard to the second reception channel and/or the third reception channel, the second and/or third base band signals are also separated into an alternating voltage part and a direct voltage part, wherein the respective alternating voltage part is filtered by means of a high-pass filter (10, 11) and is optionally amplified and the respective direct voltage part optionally experiences an offset compensation (12, 13), wherein optionally at least one alternating voltage part is supplied to a Doppler evaluation (18) in order to detect moving objects (201, 304) and at least one direct voltage part is supplied to a close range presence detector (19) in order to detect static objects (505).

5. The proximity sensor (1, 100, 200, 301, 400, 410, 500) according to one of the preceding claims, **characterised in that** the detection of static objects (505) is in a first predefined space such as a switching region (303) and/or **in that** the detection of moving objects (201, 304) is in a second predefined space.

6. The proximity sensor (1, 100, 200, 301, 400, 410, 500) according to claim 5, **characterised in that** the second predefined space is larger than or equal to the first predefined space and also comprises the first predefined space.

7. The proximity sensor (1, 100, 200, 301, 400, 410, 500) according to one of the preceding claims, **characterised in that** at least individual speed portions or all speed portions of the object (201, 304) can be detected by means of Doppler evaluation (18), wherein at least one respective sensor signal is generated for signalling at least one moving object (201, 304) and/or **in that** an object (201, 304, 505) in the first predefined space is present by means of the close range presence detector (19) and/or **in that** an extension of an object (201, 304, 505) can be determined in the first predefined space by means of the close range presence detector (19).

8. The proximity sensor (1, 100, 200, 301, 400, 410, 500) according to claim 7, **characterised in that** at least one corresponding sensor signal for signalling at least one static object (201, 304, 505) in the first predefined space is generated due to the determined extension and/or due to the determined presence.

9. The proximity sensor (1, 100, 200, 301, 400, 410, 500) according to one of the preceding claims, **characterised in that** a device can be controlled based on at least one sensor signal for signalling at least one static object (505) and/or at least one sensor signal for signalling at least one moving object (201, 304).

10. A device with at least one controllable element, wherein the device has a proximity sensor (1, 100, 200, 301, 400, 410, 500) according to one of the preceding claims, wherein the controllable element can be controlled based on at least one sensor signal for signalling at least one static object (505) and/or at least one sensor signal for signalling at least one moving object (201, 304).

11. The device according to claim 10, **characterised in that** the device and/or the controllable element can be controlled in a first operating condition if a sensor signal for signalling at least moving object (201, 304) in the second predefined space is present.

12. The device according to claim 10 or 11, **characterised in that** the device and/or the controllable element can be controlled in a second operating condition if a sensor signal for signalling at least moving object (201, 304) in the first predefined space is present and/or if at least one sensor signal for signalling at least one static object (505) in the first predefined space is present.

13. The device according to one of the preceding claims 10 to 12, **characterised in that** the device is a beverage machine (300) or an illumination device with at least one light element (203).

14. A beverage machine (300) as a device according to one of claims 10 to 13, wherein the at least one proximity sensor (1, 100, 200, 301, 400, 410, 500) according to one of claims 1 to 12 is provided and/or the beverage machine (300) is a machine for producing hot and/or cold beverages.

15. An illumination device as a device according to one of claims 10 to 13, wherein the at least one proximity sensor (1, 100, 200, 301, 400, 410, 500) according to one of claims 1 to 12 is provided, wherein at least one light element (203) which can be controlled is provided, wherein in one operating condition, for example one reduced brightness, for example about 30% of the maximum brightness, can be controlled and in another operating condition, the brightness of the light element (203) can be controlled to a maximum brightness.

## Revendications

1. Capteur de proximité (1, 100, 200, 301, 400, 410, 500) basé sur la technologie radar et comprenant une antenne émettrice servant à l'émission d'un signal de sortie (LO) et comprenant au moins une première antenne réceptrice servant à la réception d'un premier signal de réception (7), comprenant un générateur de signaux (2) servant à la production du signal de sortie, où le premier signal de réception est démodulé, dans les signaux de bande de base (I, Q), au moyen d'un démodulateur I/Q (4, 8, 9), où les signaux de bande de base (I, Q) sont répartis dans une composante de tension alternative (I_{d}, Q_{d}, 15, 16) et dans une composante de tension continue (I₁, Q₁, 14, 17), où la composante respective de tension alternative (I_{d}, Q_{d}, 15, 16) est filtrée au moyen d'un filtre passe-haut (10, 11) et facultativement amplifiée, et la composante respective de tension continue (I₁, Q₁, 14, 17) subit facultativement une compensation de décalage (12, 13), où au moins une composante de tension alternative est fournie à une interprétation Doppler (18), pour détecter des objets en mouvement (201, 304, 505), et au moins une composante de tension continue est fournie à une détection de présence dans une zone rapprochée (19), pour détecter des objets statiques (201, 304, 505).

2. Capteur de proximité (1, 100, 200, 301, 400, 410, 500) selon la revendication 1, **caractérisé en ce qu'**il est prévu au moins une deuxième antenne réceptrice servant à la réception d'un deuxième signal de réception (7), où le deuxième signal de réception est démodulé, dans les deuxièmes signaux de bande de base (I, Q), au moyen d'un démodulateur I/Q (4), où une composante de tension alternative et une composante de tension continue des deuxièmes signaux de bande de base (I, Q) sont visualisées sur un écran, où la composante respective de tension alternative est filtrée au moyen d'un filtre passe-haut (10, 11) et facultativement amplifiée, et la composante respective de tension continue subit facultativement une compensation de décalage (12, 13), où au moins une composante de tension alternative est fournie à une interprétation Doppler (18), pour détecter des objets en mouvement (201, 304, 505), et au moins une composante de tension continue est fournie à une détection de présence dans une zone rapprochée (19), pour détecter des objets statiques (201, 304, 505).

3. Capteur de proximité (1, 100, 200, 301, 400, 410, 500) selon la revendication 2, **caractérisé en ce qu'**il est prévu au moins une troisième antenne réceptrice servant à la réception d'un troisième signal de réception (7), où le troisième signal de réception est démodulé, dans les troisièmes signaux de bande de base (I, Q), au moyen d'un démodulateur I/Q (4, 8, 9), où une composante de tension continue et une composante de tension alternative des troisièmes signaux de bande de base (I, Q) sont visualisées sur un écran, où la composante respective de tension alternative est filtrée au moyen d'un filtre passe-haut (10, 11) et facultativement amplifiée, et la composante respective de tension continue subit facultativement une compensation de décalage (12, 13), où au moins une composante de tension alternative est fournie à une interprétation Doppler (18), pour détecter des objets en mouvement (201, 304, 505), et au moins une composante de tension continue est fournie à une détection de présence dans une zone rapprochée (19), pour détecter des objets statiques (201, 304, 505).

4. Capteur de proximité selon la revendication 2 ou 3, **caractérisé en ce que**, dans le cas du deuxième canal de réception et / ou dans le cas du troisième canal de réception, les deuxièmes et / ou les troisièmes signaux de bande de base (I, Q) sont répartis eux aussi dans une composante de tension alternative et dans une composante de tension continue, où la composante respective de tension alternative est filtrée au moyen d'un filtre passe-haut (10, 11) et facultativement amplifiée, et la composante respective de tension continue subit facultativement une compensation de décalage (12, 13), où facultativement au moins une composante de tension alternative est fournie à une interprétation Doppler (18), pour détecter des objets en mouvement (201, 304), et au moins une composante de tension continue est fournie à une détection de présence dans une zone rapprochée (19), pour détecter des objets statiques (505) .

5. Capteur de proximité (1, 100, 200, 301, 400, 410, 500) selon l'une quelconque des revendications précédentes, **caractérisé en ce que** la détection d'objets statiques (505) se produit dans une première zone d'espace prédéfinie telle qu'une zone de commutation (303) et / ou **en ce que** la détection d'objets en mouvement (201, 304) se produit dans une deuxième zone d'espace prédéfinie.

6. Capteur de proximité (1, 100, 200, 301, 400, 410, 500) selon la revendication 5, **caractérisé en ce que** la deuxième zone d'espace prédéfinie est plus grande que la première zone d'espace prédéfinie ou égale à celle-ci, et englobe la première zone d'espace prédéfinie.

7. Capteur de proximité (1, 100, 200, 301, 400, 410, 500) selon l'une quelconque des revendications précédentes, **caractérisé en ce qu'**au moins des composantes de vitesse individuelles ou toutes les composantes de vitesse de l'objet (201, 304) sont détectables au moyen de l'interprétation Doppler (18), où est produit au moins un signal de capteur correspondant servant à la signalisation d'au moins un objet en mouvement (201, 304), et / ou **en ce que**, au moyen de la détection de présence dans une zone rapprochée (19), une présence d'un objet (201, 304, 505) se produit dans la première zone d'espace prédéfinie et / ou **en ce que**, au moyen de la détection de présence dans une zone rapprochée (19), une taille d'un objet (201, 304, 505) peut être déterminée dans la première zone d'espace prédéfinie.

8. Capteur de proximité (1, 100, 200, 301, 400, 410, 500) selon la revendication 7, **caractérisé en ce que**, en raison de la taille détectée et / ou en raison de la présence détectée, au moins un signal de capteur correspondant servant à la signalisation d'au moins un objet statique (201, 304, 505) est produit dans la première zone d'espace prédéfinie.

9. Capteur de proximité (1, 100, 200, 301, 400, 410, 500) selon l'une quelconque des revendications précédentes, **caractérisé en ce que**, sur la base d'au moins un signal de capteurs servant à la signalisation d'au moins un objet statique (505) et / ou sur la base d'au moins un signal de capteur servant à la signalisation d'au moins un objet en mouvement (201, 304), une activation d'un appareil peut être exécutée.

10. Appareil comprenant au moins un élément pouvant être activé, où l'appareil présente un capteur de proximité (1, 100, 200, 301, 400, 410, 500) selon l'une quelconque des revendications précédentes, où, sur la base d'au moins un signal de capteur servant à la signalisation d'au moins un objet statique (505) et / ou sur la base d'au moins un signal de capteur servant à la signalisation d'au moins un objet en mouvement (201, 304), une activation de l'élément pouvant être activé peut être exécutée.

11. Appareil selon la revendication 10, **caractérisé en ce que** l'appareil et / ou l'élément pouvant être activé, en présence d'un signal de capteur servant à la signalisation d'au moins un objet en mouvement (201, 304) dans la deuxième zone d'espace prédéfinie, peut être activé dans un premier état de fonctionnement.

12. Appareil selon la revendication 10 ou 11, **caractérisé en ce que** l'appareil et / ou l'élément pouvant être activé, en présence d'un signal de capteur servant à la signalisation d'au moins un objet en mouvement (201, 304) dans la première zone d'espace prédéfinie, et / ou en présence d'un signal de capteur servant à la signalisation d'au moins un objet statique (505) se trouvant dans la première zone d'espace prédéfinie, peut être activé dans un deuxième état de fonctionnement.

13. Appareil selon l'une quelconque des revendications précédentes 10 à 12, **caractérisé en ce que** l'appareil est un distributeur automatique de boissons (300), ou bien un dispositif d'éclairage comprenant au moins un élément lumineux (203).

14. Distributeur automatique de boissons (300) conçu comme un appareil selon l'une quelconque des revendications 10 à 13, où il est prévu le capteur de proximité (1, 100, 200, 301, 400, 410, 500) au moins au nombre de un, selon l'une quelconque des revendications 1 à 12, et / ou le distributeur automatique de boissons (300) est un distributeur automatique servant à la préparation de boissons chaudes et / ou froides.

15. Dispositif d'éclairage conçu comme un dispositif selon l'une quelconque des revendications 10 à 13, où il est prévu le capteur de proximité (1, 100, 200, 301, 400, 410, 500) au moins au nombre de un, selon l'une quelconque des revendications 1 à 12, où il est prévu au moins un élément lumineux (203) qui peut être activé, où, dans un état de fonctionnement, par exemple une luminosité réduite peut être activée, en étant par exemple réduite de 30 % environ par rapport à la luminosité maximale, et, dans un autre état de fonctionnement, la luminosité de l'élément lumineux (203) peut être activée à une luminosité maximale.
